# DEMANDE DE BREVET EUROPEEN

(11) **EP 2 378 460 A1**
(43) Date de publication de la demande: **19.10.2011**
(21) Numéro de dépôt: 11162009.2
(22) Date de dépôt: 12.04.2011
(51) Int. Cl.: G06K 9/00, G01C 23/00, G08G 5/06

(54) **Dispositif d'assistance embarque au suivi d'une route aeroportuaire par un aeronef**

(30) Priorité: 16.04.2010 FR 1001632
(71) Demandeur: Thales, 92200 Neuilly Sur Seine (FR)
(72) Inventeur: Lussiez, Eric, 33187, LE HAILLAN Cedex (FR); Michel, François, 33187, LE HAILLAN Cedex (FR); Dubourg, Bernard, 33187, LE HAILLAN Cedex (FR)
(74) Mandataire: Bréda, Jean-Marc

(57) **Abrégé**

Le domaine général de l'invention est celui des dispositifs d'assistance embarqué au suivi d'une route aéroportuaire par un aéronef, ledit dispositif comprenant :
- un système embarqué de capteurs optiques (1) ;
- des moyens (2) fournissant la position courante dudit aéronef ;
- une base de données (3) comportant les informations topologiques de l'aéroport ;
- un système de reconnaissance (4) fournissant, à partir des images vidéo issues du système de capteurs optiques, des données caractéristiques de la portion de route aéroportuaire, permettant d'identifier une « primitive » simple représentative de la portion de route suivie ;
- un calculateur de traitement (5) agencé de façon
o à extraire de la base de données, une succession de formes géométriques simples représentant la route aéroportuaire et de même nature que les « primitives » issues du système de reconnaissance ;
o à les comparer auxdites « primitives » ;
o à valider ou à invalider la route suivie par ledit aéronef en fonction du résultat de la comparaison.

## Description

Le domaine de l'invention est celui des dispositifs électroniques ou optoélectroniques d'aide au guidage au sol pour aéronef circulant sur une route aéroportuaire. Il est à noter que, dans ce qui suit, on utilisera indistinctement les termes d'avion, de porteur et d'appareil pour désigner un aéronef.

Les aéroports représentent actuellement un goulet d'étranglement pour un trafic aérien de plus en plus intense. L'accroissement de leur capacité entraîne une complexité de plus en plus importante du réseau de pistes, des voies de circulation encore appelées « taxiways » et des zones d'embarquement. On assiste donc de plus en plus souvent à des incidents où l'aéronef emprunte des chemins non conformes à l'itinéraire envoyé par le contrôle au sol via la radio. Bien entendu, les possibilités d'incidents augmentent par mauvais temps ou par mauvaises conditions de visibilité. Il est donc fondamental que le pilote de l'aéronef sache très précisément où son aéronef se situe dans la zone aéroportuaire et qu'il connaisse parfaitement la route qu'il aura à emprunter et les manoeuvres qu'il aura à effectuer.

Du point de vue du pilote, la position de l'aéronef dans une zone aéroportuaire est actuellement obtenue par une consultation des indications extérieures sur ou aux abords des zones de roulage. Cette perception du positionnement est corrélée avec les indications d'une vue de type « moving-map » qui affiche l'aéronef sur un plan horizontal de la zone aéroportuaire (vue de dessus ou « bird's eye »). Ce système d'affichage utilise une localisation du porteur par les données de position relevées par des systèmes de type « GPS » (Global Positioning System) et/ou la centrale inertielle de l'appareil. Les marges d'erreur engendrées par les systèmes basés sur les systèmes GPS sont trop importantes pour conduire l'aéronef au roulage par des conditions météorologiques mauvaises dues par exemple à un brouillard dense ou à une pluie intense, qui réduisent fortement la visibilité.

Pour améliorer la perception de l'environnement, notamment lors de conditions de mauvaise visibilité, on utilise des systèmes de type « EVS » signifiant « Enhanced Vison System » basés sur des présentations d'images vidéo prises par des caméras embarquées. Ces systèmes « EVS » qui constituent une aide visuelle appréciable présentent l'inconvénient de ne pas corréler les images fournies avec des bases de données aéroportuaires.

Pour améliorer l'efficacité des présentations « EVS », des systèmes ont été développés comprenant à la fois des capteurs optiques et des moyens de comparaison des images issues de ces capteurs avec des informations issues de bases de données aéroportuaires. Ces systèmes sont dits « ESVS », signifiant « Enhanced Synthetic Vision System » ou « CVS » pour « Combined Vision System ». Un des objectifs principaux de ces systèmes est la détection des lampes de pistes puis la reconnaissance de formes ou de motifs connus sous le terme de « pattern recognition à partir de points ou de primitives géométriques issues de cette détection. Pour assurer cette détection tous temps, les caméras de ces systèmes peuvent fonctionner dans différentes gammes de longueurs d'ondes allant du visible au proche infrarouge afin de mieux différencier les images des lampes de pistes de l'image de fond ou « background ». On peut également combiner de différentes manières les images issues des capteurs optiques ou les mélanger avec des informations synthétisées venant de la base de données. La mise en correspondance avec les informations contenues dans la base de données permet d'enrichir les images résultantes du système optique et de consolider la position de l'aéronef à partir de la position dans l'image des objets détectés sur la piste. On trouvera des informations sur ce type de systèmes dans les brevets US 6232602, US 6373055, US 6806469 et US 7102130.

Le brevet US 7382288 de la société Rockwell and Collins décrit un dispositif embarqué présentant une vue du paysage extérieur sur un viseur Tête Haute ou « HUD », signifiant « Head-Up Display » avec une représentation des panneaux indicateurs de l'aéroport, ce dispositif est basé sur un système ne comprenant ni caméras ni corrélation avec une base de données BDD. L'aide à l'orientation sur l'aéroport se fait par l'affichage de panneaux dans le HUD. Ce dispositif présente l'inconvénient majeur de baser la représentation sur une information de localisation de type « GPS » non consolidée par une vision extérieure, la précision n'étant pas suffisante pour guider parfaitement l'avion en toutes circonstances.

Ces systèmes permettent d'améliorer sensiblement la perception de l'environnement extérieur. Cependant, l'image proposée par ces systèmes ne facilite pas la perception et la validation de la trajectoire à suivre par le pilote. En effet, dans des conditions de visibilité réduite, la vue EVS ne contenant pas l'indication de la trajectoire à suivre, le système présente l'inconvénient pour le pilote de devoir corréler la trajectoire représentée par exemple sur une vue de type « moving map » avec sa vue EVS éventuellement enrichie. Il en résulte une surcharge de travail. Le pilote doit extraire des indices caractéristiques de la route à suivre pour pouvoir vérifier que les motifs reconnus par le système de reconnaissance correspondent bien à la route voulue. Ainsi, ces systèmes ne permettent ni de confirmer automatiquement que l'avion suit bien une route ni de générer des alertes en cas de déviation par rapport à cette route.

Le dispositif d'assistance embarqué au suivi d'une route aéroportuaire par un aéronef selon l'invention ne présente pas ces inconvénients. Au regard des procédures opérationnelles, le dispositif selon l'invention permet de piloter l'avion, notamment en cas de visibilité fortement réduite, pour effectuer un trajet sur les voies de circulation aéroportuaires. La validation de la route se fait par la reconnaissance de formes ou de primitives détectées dans l'image vidéo issues des pistes et des bords de piste et la comparaison desdites primitives avec les informations issues des bases de données. A titre d'exemples, on peut détecter les lampes de pistes, discriminer les limites piste / bord de piste ou les marquages au sol. L'invention concerne également une présentation d'images de type « EVS » enrichie d'informations extraites de la base de données et adaptée au cheminement sur la route aéroportuaire.

Plus précisément, l'invention a pour objet un dispositif d'assistance embarqué au suivi d'une route aéroportuaire par un aéronef, ledit dispositif comprenant au moins :
- un système de capteurs optiques agencé de façon à fournir des images vidéo de ladite route aéroportuaire ;
- des moyens fournissant la position courante dudit aéronef ;
- une base de données comportant les informations topologiques de l'aéroport sur la route aéroportuaire à suivre par l'aéronef ; caractérisé en ce que le dispositif comprend:
- un système de reconnaissance agencé de façon à fournir, à partir des images vidéo, des données caractéristiques de la portion de la route aéroportuaire vue par le système de capteurs optiques ;
- un calculateur de traitement agencé de façon :
   o à extraire de la base de données, une succession de formes géométriques simples représentant la route aéroportuaire ;
   o à construire des « primitives à partir des informations reçues du système de reconnaissance, une « primitive» comportant au moins un motif géométrique simple représentative de la portion de route ;
   o à comparer lesdites « primitives » aux formes géométriques simples représentant la route aéroportuaire et extraites de la base de données ;
   o à valider ou à invalider la route suivie par ledit aéronef en fonction du résultat de la comparaison.

Avantageusement, le dispositif comporte un système de visualisation comprenant un écran de visualisation, ledit écran affichant une vue conforme de la route aéroportuaire située devant l'aéronef, caractérisé en ce ledit écran affiche également une succession de symboles graphiques, chaque symbole graphique étant associé à une forme géométrique extraite de la base de données.

Avantageusement, le symbole graphique central correspond à la portion de la route aéroportuaire succédant immédiatement à la portion de route sur laquelle se trouve l'aéronef. Dans une variante, le symbole graphique central est affiché sur l'écran à la même hauteur que la portion de route aéroportuaire représentée en vue conforme et à laquelle il est associé. Avantageusement, les symboles comportent des informations alphanumériques.

Avantageusement, le dispositif affiche un message d'alerte sur l'écran de visualisation ou émet une alarme sonore lorsque le calculateur de traitement invalide la route suivie par l'aéronef.

L'invention sera mieux comprise et d'autres avantages apparaîtront à la lecture de la description qui va suivre donnée à titre non limitatif et grâce aux figures annexées parmi lesquelles :
La figure 1 représente un synoptique du dispositif d'assistance embarqué selon l'invention ;
La figure 2 représente une vue de dessus d'un aéronef suivant une route aéroportuaire ;
La figure 3 représente le tableau de classification des primitives composant ladite route aéroportuaire ;
Les figures 4 et 5 représentent deux vues de type « EVS » selon l'invention ;
Les figures 6 à 10 représentent différents types de symboles selon l'invention ;
Les figures 11 à 13 représentent la détection d'une erreur de cheminement par le dispositif selon l'invention.

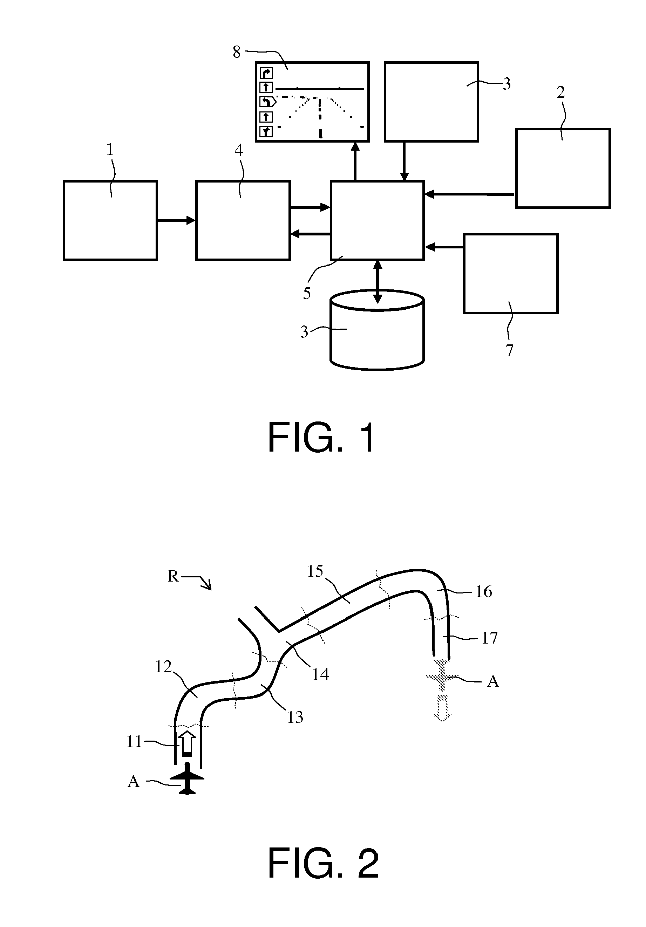

Le dispositif selon l'invention est représenté en figure 1. Il comprend au moins :
- un système de capteurs optiques 1 agencé de façon à fournir des images vidéo de ladite route aéroportuaire ;
- des moyens 2 fournissant la position courante dudit aéronef ;
- une base de données 3 comportant les informations topologiques de l'aéroport sur la route aéroportuaire à suivre par l'aéronef ;
- un système de reconnaissance 4 agencé de façon à fournir, à partir des images vidéo, une « primitive » de la portion de la route aéroportuaire vue par le système de capteurs optiques, une « primitive» étant au moins un motif géométrique simple représentative de la portion de route.
- un calculateur de traitement ou processeur 5 relié aux moyens 2 fournissant la position courante dudit aéronef, à la base de données 3, au système de reconnaissance 4, aux systèmes de l'aéronef 6, à des moyens de mémorisation 7 destinés à stocker les informations utiles extraites de la base de données. Le calculateur est agencé de façon:
   o à extraire de la base de données, une succession de formes géométriques simples représentant la route aéroportuaire et de même nature que les « primitives » issues du système de reconnaissance ;
   o à les comparer auxdites « primitives ». L'issue de cette corrélation est la déduction d'informations exploitables par le pilote ou les autres systèmes avion afin de suivre la route qui a été assignée à l'avion dans les phases de roulage au sol.
   o à valider ou à invalider la route suivie par ledit aéronef en fonction du résultat de la comparaison ;
- un système de visualisation 8 comprenant au moins un écran de visualisation, ledit écran affichant une vue conforme ou une vue de dessus de la route aéroportuaire et une succession de symboles graphiques, chaque symbole graphique étant associé à une forme géométrique extraite de la base de données.

Les capteurs 1 sont un système d'une ou de plusieurs caméras pouvant détecter des ondes lumineuses dans le domaine infrarouge ou visible. Elles sont généralement disposées à l'avant de l'appareil.

Les moyens 2 fournissant la position courante dudit aéronef dans la zone aéroportuaire peuvent être fournies par le système « ACARS », acronyme de « Aircraft Communication Addressing and Reporting System qui est un système de communications codées selon une norme aéronautique « ARINC » entre un aéronef et une station au sol. La route et les autorisations associées appelées aussi « clearance » sont communiquées à l'équipage, soit via la radio par l' « ATC », signifiant « Aircraft Trafic Control », soit par des liaisons numériques de type « CPDLC », signifiant « Controller Pilot Data Link Communications ». L'équipage renseigne les systèmes avion afin de prendre en compte cette route qui pourrait être affichée sur un dispositif de visualisation sous la forme d'une « moving map » aéroportuaire.

La base de données 3, dont le format est généralement normalisé, par exemple par la norme RTCA DO-272/EUROCAE ED-99 contient des primitives géométriques de description au sol du type polygone, ligne ou point qui permettent de décrire l'extension horizontale des objets de l'aéroport : bâtiments, pistes ou « runways », routes d'accès aux parkings pour les aéronefs ou « taxiways », emplacement des parkings ou « aprons », marquages au sol ou « guidance lines », ... Une primitive est définie par un « patron » ou motif géométrique simple (segment de droite, arc de cercle, formes élémentaires en T, en V ou en Y,...) auquel est associé des caractéristiques de roulage comme la distance à suivre, la vitesse de roulage autorisée....

Dans un premier temps, le calculateur 5, en fonction d'une route à suivre lors du roulage sur les pistes de l'aéroport et de la position de l'avion, extrait de la base de données les informations à reconnaître et les structure de manière à les utiliser lors du roulage. Les étapes pour la création des informations dans la mémoire 7 sont donc :
- calcul de la suite des éléments identifiables ou primitives à partir de la route et des critères utilisables par le système de reconnaissance. Ces critères sont basés sur des motifs ou des patrons reconnaissables facilement dans les images issues du système de capteurs ;
- Organisation de la structure de données contenant la suite précitée. L'organisation peut être basée dans l'ordre de parcours de la suite d'éléments à reconnaître lors du parcours de la route.

Dans un second temps, le calculateur 5 utilise cette structure de données afin de vérifier le suivi de la trajectoire et de donner des informations additionnelles relatives à ce suivi. La méthode consiste, à partir de la localisation du porteur et de sa route, à extraire une suite de primitives à partir des éléments de la base de données le long du parcours ayant la caractéristique d'être identifiables soit directement soit par interpolation par le système de vision 1. Par exemple, la primitive peut être un segment au centre de piste extrait des polygones descriptif d'une voie de circulation L'interpolation consiste à déduire des objets identifiés par la fonction de reconnaissance comme les lampes de centre de piste par exemple, des informations permettant d'identifier une primitive comme des segments au centre de la piste permettant de « classifier » la partie visualisée. L'identification se fait par comparaison de caractéristiques géométriques de la forme reconnue comme, par exemple, la position et le rayon de courbure d'une courbe avec les caractéristiques géométriques de la primitive à reconnaître dans la liste de primitives construites précédemment.

Ces objets constituent une suite d'éléments connexes marqués comme tels dans la structure de données créée dans la mémoire 7. Dans le cas ou le processeur 5 fournit au système de reconnaissance 4 les primitives à reconnaître, alors la sortie du système de reconnaissance 4 vers le processeur 5 contient uniquement la confirmation ou l'absence de confirmation de la primitive à reconnaître.

La mise à disposition de cette structure de données pendant le roulage permet, au vu des informations de localisation, de valider les étapes constituées par les reconnaissances des motifs attendus et ainsi de consolider le suivi de la route.

Le calculateur peut stocker lors de la validation des étapes, la prochaine étape à valider et par ailleurs donner des informations sur cette prochaine étape. Le calculateur peut également faciliter le travail du système de reconnaissance en lui fournissant une image transformée de la forme ou de son patron dans le repère de visualisation de la caméra grâce à la connaissance des caractéristiques des caméras telles la hauteur de la caméra par rapport au sol, son angle de vue, la direction de la vue, ....

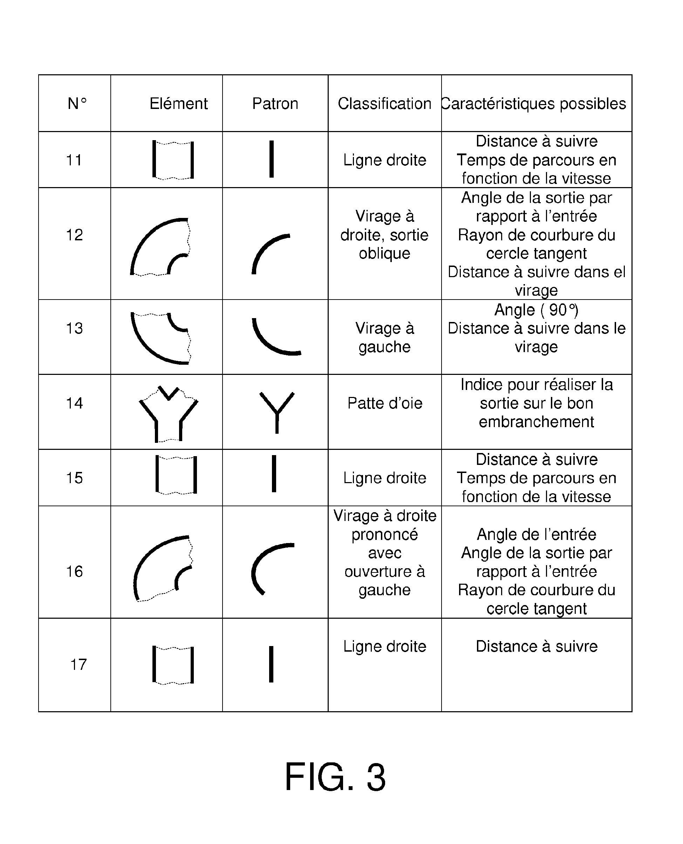

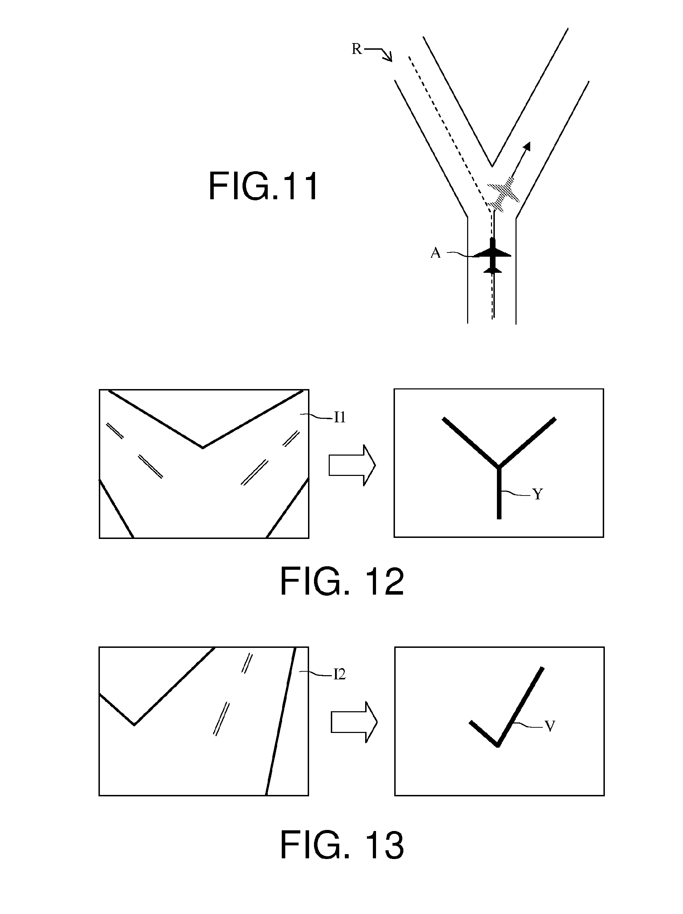

Les figures 2 et 3 illustrent le fonctionnement du dispositif d'assistance au suivi d'une route aéroportuaire selon l'invention. Sur la figure 2, on a représenté la vue de dessus d'une route aéroportuaire R à suivre par un aéronef A. Sur cette figure et sur la figure 11, la position courante de l'aéronef A est représentée en noire, sa position future en gris. Cette route R est tronçonnée en sept éléments numérotés de 11 à 17. Comme indiqué sur le tableau de la figure 3, le calculateur va déterminer la primitive ou le patron correspondant à chaque élément. Par exemple, l'élément 11 correspond à un tronçon de ligne droite. En fonction des différentes données, le calculateur va ensuite attribuer à chaque primitive des caractéristiques et des consignes nécessaires au roulage de l'aéronef. Ainsi, comme on le voit sur la première ligne du tableau de la figure 3, à la ligne droite 11, sont associés deux caractéristiques, la première concernant la distance à suivre, la seconde le temps de parcours prévisible, fonction de la vitesse autorisée. Enfin, le calculateur va comparer la succession de ses « primitives » extraites de la base de données avec celles effectivement fournies par le système de reconnaissance. Ainsi, dans l'exemple ci-dessus, le système devra reconnaître successivement la ligne droite 11, le virage à droite 12, le virage à gauche 13, la « patte d'oie » 14,...

Lors de la phase de roulage, l'équipage a une charge importante de travail. D'une part, un des deux membres d'équipage noté « PF » pour « Pilot Flying » a en charge le pilotage et l'autre membre, noté « PNF » pour « Pilot Non Flying » a plus particulièrement la charge des communications avec l'ATC ou « Air Traffic Control ». Les deux membres d'équipage ont besoin de consulter la carte pour assurer les tâches assignées, en ayant le plus possible le regard orienté vers l'extérieur afin d'obtenir le maximum d'informations extérieures et d'assurer le suivi de la route en toute sécurité. Ces tâches sont particulièrement lourdes à assumer lorsque l'équipage est réduit au seul pilote.

Le dispositif de visualisation 8 présente au pilote une symbologie représentative des étapes clés de la route à suivre. Cette symbologie, représentative de la validation par le système du suivi des étapes lors du trajet de l'avion, permet d'informer le pilote des décisions à prendre lors des étapes, et de l'alerter lorsque la trajectoire avion n'est plus compatible de la route à suivre. Il existe différents dispositifs de visualisation dans un cockpit d'aéronef moderne. Préférentiellement, on affiche les informations dans un viseur Tête Haute ou « HUD » pour « Head-Up Display ». Ce type de dispositif permet de superposer à la vue de l'extérieur une vue vidéo de type « EVS » pour « Enhanced Vision System » comportant une description symbolique représentative du trajet ou de la route à suivre. Généralement, la vue EVS est enrichie d'une symbologie synthétique en vue conforme, la description de la route à suivre étant représentée en vue non conforme. On entend par vue conforme une vue se superposant exactement à la vue réelle extérieure de la route. La route à suivre est représentée par une succession de motifs issus du calculateur et représentant les différentes « primitives » constituant la route. Ils peuvent comporter des caractéristiques et/ou des indications d'aiguillage.

La représentation peut distinguer les étapes déjà reconnues, l'étape courante ou prochainement à atteindre et les étapes futures. Le système peut alors afficher une vue qui présente les symboles sous la forme de menu défilant, avec une distinction entre la situation courante et la prochaine étape à venir. Les symboles peuvent comporter des caractéristiques liées à ces étapes. La caractéristique peut être une indication de la distance au point d'entrée dans la zone de la primitive comme une entrée de virage, un point d'alignement sur une ligne droite, ...

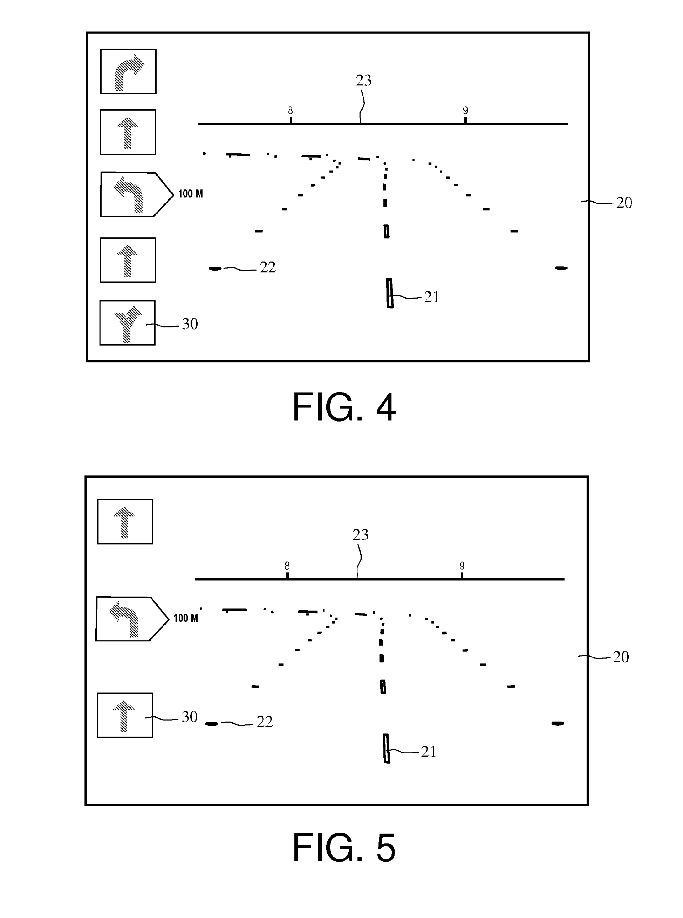

A titre d'exemple, les figures 4 et 5 représentent deux vues 20 de type « EVS» qui peuvent être présentées dans un viseur Tête Haute. Ces deux vues comportent essentiellement une représentation de la piste en vue conforme et des symboles 30 selon l'invention.

Sur ces vues en perspective de la piste, on distingue les lampes 22 qui bordent la piste et les bandes centrales 21. Comme on le voit, la piste est d'abord rectiligne puis tourne à gauche. L'horizon est également représenté sous la forme d'une ligne droite 23.

Les symboles 30 sont représentatifs de la route à suivre. Sur les figures 4 et 5, ils sont alignés verticalement et successivement à gauche des vues conformes. Bien entendu, d'autres dispositions sont possibles.

On peut avoir différentes logiques de représentations possibles de ces symboles. A titre de premier exemple représenté sur la figure 4, le symbole graphique central correspond à la portion de la route aéroportuaire succédant immédiatement à la portion de route sur laquelle se trouve l'aéronef de façon que le pilote puisse anticiper la prochaine action qu'il aura à effectuer. Pour le distinguer des autres, ce symbole comporte un entourage pentagonal différent de l'entourage rectangulaire des autres symboles représentés. Une option peut être offerte au pilote par l'activation d'un mode particulier de parcours des étapes de la trajectoire, lui permettant de faire défiler les différents symboles représentant la route à suivre via un média d'interaction de type « mouse wheel ».

A titre de second exemple représenté sur la figure 5, le symbole graphique central est affiché sur l'écran à la même hauteur que la portion de route aéroportuaire représentée en vue conforme à laquelle il est associé. De même, l'étape courante qui est dans ce cas, la circulation sur une ligne droite est représentée en face de sa zone dans la perspective de l'image. Là encore, pour le distinguer des autres, ce symbole comporte un entourage pentagonal différent de l'entourage rectangulaire des autres symboles représentés. On peut également représenter les étapes futures et absentes de la perspective au dessus de l'horizon 23.

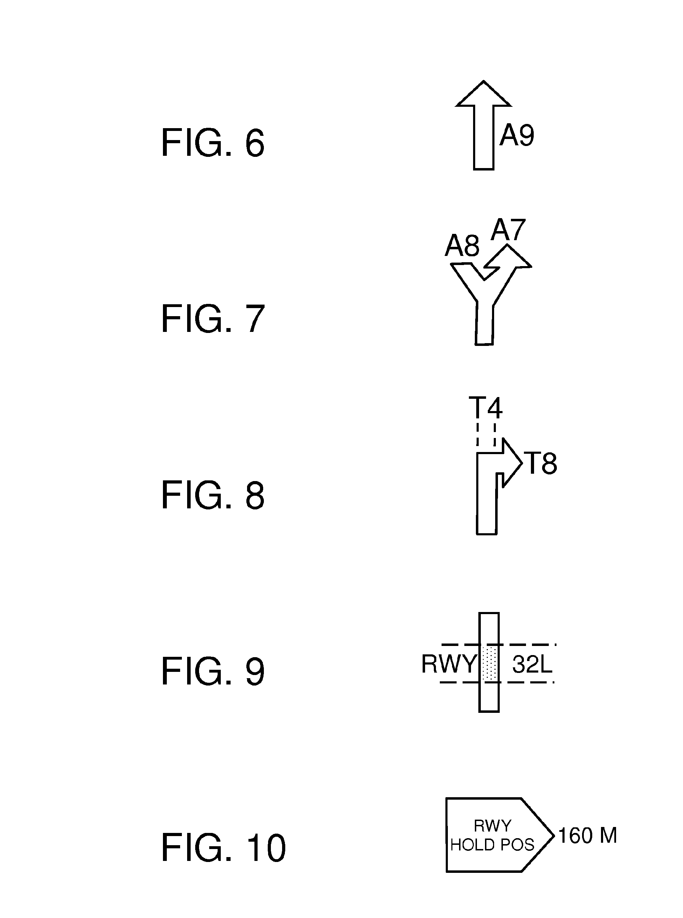

Sur les figures 4 et 5, les symboles sont des flèches grises épaisses muettes dont la forme correspond à la primitive à représenter. On peut également particulariser la représentation graphique et/ou ajouter des labels simples à ces symboles graphiques primaires. Les figures 6 à 10 illustrent ces possibilités. Sur les figures 6 et 7, les labels sont représentatifs des noms des voies de circulation ou de pistes courants « A7 », « A8 » et « A9 » ou sont en relation topographique représentative de la topologie des voies de circulation représentées.

La représentation des symboles peut être enrichie afin que l'apparence de la totalité ou d'une partie du symbole soit porteuse de sens. Par exemple, sur la figure 8, les pointillés indiquent que la voie T4 est présentée à titre d'indication et n'est pas à emprunter. Sur la figure 9, la piste ou « runway » « RWY 32 » a un aspect spécifique différent de celui de la piste courante. Les symboles peuvent correspondre à un élément de signalisation. Cette représentation s'avère particulièrement pertinente lorsque, comme représenté sur la figure 5, le symbole graphique central est affiché sur l'écran à la même hauteur que la portion de route aéroportuaire représentée en vue conforme et à laquelle il est associé. Par exemple, le label « RWY HOLD POS » couplé à l'indication « 160 M » indique au pilote qu'il doit respecter un arrêt de seuil de piste à 160 mètres, encore appelé « RunWaY HOLDing POSition ».

En mettant en parallèle la trajectoire théorique de l'avion, c'est à dire ce que le système aurait dû reconnaître s'il avait suivi la bonne route avec la trajectoire réelle, c'est-à-dire ce que le système de reconnaissance a effectivement identifié, il est possible de détecter les erreurs de cheminement sur les pistes.

De la même façon, en surveillant les valeurs des commandes de pilotage ou bien celles d'attitude de l'avion et en les comparant aux motifs et à leur position détectée dans les images issues des capteurs, il est possible :
- d'indiquer au pilote les consignes relativement aux motifs, soit de façon visuelle par exemple sur la vue « EVS », soit de façon sonore ;
- de déterminer au plus tôt les erreurs d'orientation dues au non respect des consignes ;
- d'indiquer une tendance de suivi de la trajectoire. L'indication de cette tendance est essentielle lorsque le pilote s'éloigne de la bonne trajectoire. Cette indication peut être représentée par une symbologie spécifique ou l'affichage de messages textuels comme « Wrong Taxiway » ou « Missed Taxiway ». On peut également générer des consignes ou des alarmes audio.

De plus, la connaissance des caractéristiques du porteur permet au système d'évaluer l'impossibilité de rattraper la route nominale à partir des caractéristiques des motifs.

Cet avantage du système est rendu possible par la précision de la reconnaissance de forme bien supérieure à la précision de la localisation par des systèmes de type « GPS » et par la mise en oeuvre de critères associés au motif. Un critère est une comparaison de valeurs mesurées comparé aux caractéristiques du motif.

Les figures 11, 12 et 13 illustrent ces possibilités de détection d'erreurs de trajectoire. Sur ces figures, l'appareil A est face à une « patte d'oie » en « Y ». Il a pris ou va prendre le mauvais embranchement et risque de se retrouver dans la branche droite de l'Y alors qu'il aurait dû emprunter la branche gauche. Avant l'embranchement, les capteurs enregistrent l'image I1 figurant à gauche de la figure 12 et le système de reconnaissance, à partir de cette image détecte la « patte d'oie » en Y représentée sue la vue de droite de la figure 12. Après une certaine durée suivant la validation du motif en « Y », les capteurs enregistrent l'image I2 représentée à gauche de la figure 13, le système de reconnaissance détecte un motif tel que représenté sur la vue de droite de cette figure 13. Ce motif est un V dont la branche gauche est plus courte que la branche droite. Or, si l'avion avait emprunté la bonne piste, c'est la branche gauche du V qui aurait dû être la plus longue. Dans ce cas, le système propose une indication pour alerter de la mauvaise direction, et/ou indiquer la bonne. Un des critères décisionnels peut être d'évaluer la distance entre la pointe de l'embranchement et le porteur. Si cette distance est trop faible, le système signale l'impossibilité de suivre la bonne route au pilote, afin qu'il établisse une nouvelle route en collaboration avec l'ATC.

Les parties de trajectoire reconnues par le système de reconnaissance peuvent être représentée graphiquement sur une vue de type « moving-map » qui peut être une vue de dessus. On peut utiliser une couleur différente ou bien un surlignage qui ressemble à une barre de progression. De la même manière, on peut représenter sur cette vue de dessus de type « moving map » le cône de vision ou « camembert » qui permet de représenter le secteur angulaire latéral vu par le système de vision. De la même manière, on peut représenter sur une vue latérale le cône de vision qui permet de représenter le secteur angulaire vertical vu par le système de vision, associé à une vue de l'avion de profil.

## Revendications

1. Dispositif d'assistance embarqué au suivi d'une route aéroportuaire par un aéronef, ledit dispositif comprenant au moins :
- un système de capteurs optiques (1 ) agencé de façon à fournir des images vidéo de ladite route aéroportuaire ;
- des moyens (2) fournissant la position courante dudit aéronef,
- une base de données (3) comportant les informations topologiques de l'aéroport sur la route aéroportuaire à suivre par l'aéronef ; **caractérisé en ce que** le dispositif comprend
- un système de reconnaissance (4) agencé de façon à fournir, à partir des images vidéo, des données caractéristiques de la portion de la route aéroportuaire vue par le système de capteurs optiques ;
- un calculateur de traitement (5) agencé de façon:
o à extraire de la base de données, une succession de formes géométriques simples représentant les étapes de la route aéroportuaire ;
o à construire des « primitives à partir des informations reçues du système de reconnaissance, une « primitive» comportant au moins un motif géométrique simple représentative de la portion de route ;
o à comparer lesdites « primitives » aux formes géométriques simples représentant les étapes de la route aéroportuaire extraites de la base de données ;
o à valider ou à invalider la route suivie par ledit aéronef en fonction du résultat de la comparaison ;
- un système de visualisation (8) comprenant un écran de visualisation, ledit écran affichant une vue (20) conforme de la route aéroportuaire située devant l'aéronef et une succession de symboles graphiques (30), chaque symbole graphique étant associé à une forme géométrique extraite de la base de données, la succession des symboles représentant les étapes de la route aéroportuaire déjà reconnues, l'étape courante et les étapes futures.

2. Dispositif d'assistance embarqué au suivi d'une route aéroportuaire par un aéronef selon la revendication 1, **caractérisé en ce que** le symbole graphique central correspond à la portion de la route aéroportuaire succédant immédiatement à la portion de route sur laquelle se trouve l'aéronef.

3. Dispositif d'assistance embarqué au suivi d'une route aéroportuaire par un aéronef selon la revendication 1, **caractérisé en ce que** le symbole graphique central est affiché sur l'écran à la même hauteur que la portion de route aéroportuaire représentée en vue conforme et à laquelle il est associé.

4. Dispositif d'assistance embarqué au suivi d'une route aéroportuaire par un aéronef selon l'une des revendications 1 à 3, **caractérisé en ce que** les symboles comportent des informations alphanumériques.

5. Dispositif d'assistance embarqué au suivi d'une route aéroportuaire par un aéronef selon l'une des revendications 1 à 4, **caractérisé en ce que** le dispositif affiche un message d'alerte sur l'écran de visualisation ou émet une alarme sonore lorsque le calculateur de traitement invalide la route suivie par l'aéronef.
